# DEMANDE DE BREVET EUROPEEN

(11) **EP 2 008 630 A2**
(43) Date de publication de la demande: **31.12.2008**
(21) Numéro de dépôt: 08305329.8
(22) Date de dépôt: 26.06.2008
(51) Int. Cl.: A61G 5/08, A47C 1/14, A47C 15/00, B60F 3/00

(54) **Équipement amphibie pour la relaxation des personnes**

(30) Priorité: 28.06.2007 FR 0756100
(71) Demandeur: Eurotech Diffusion, 42100 Saint-Etienne (FR)
(72) Inventeur: Ferriol, Pierre-Marie, 42170, Saint Just Saint Rambert (FR); Bouvier, Jean Christophe Marcel, 43140, St Didier en Velay (FR)
(74) Mandataire: Dupuis, François

(57) **Abrégé**

L'équipement amphibie pour la relaxation des personnes **est remarquable en ce qu'il comprend** une première ossature tubulaire en forme de U définissant la base de construction de l'équipement et recevant un plan d'assise, ladite première ossature recevant les moyens de roulement, et à l'avant coopérant avec 'une seconde ossature tubulaire (5) ayant une triple fonction, d'une part de constituer un repose jambes et, d'autre part, recevoir un moyen support de flotteurs, **et en ce que** dans sa partie arrière, la première ossature reçoit, à articulations réglables, une troisième ossature tubulaire (14) ayant une triple fonction, d'une part de dosseret et, d'autre part, support d'un moyen (15) pour la réception de flotteurs (16), et de manoeuvre, **et en ce que** l'équipement comprend des accoudoirs articulés solidarisés à la troisième ossature **et en ce que** les flotteurs (7 et 16) sont montés sur des bras supports articulés permettant leur intégration dans le volume des cadres supports associés aux secondes et troisièmes ossatures en situation de pliage et étant écartés radialement en situation de dépliage et d'utilisation.

## Description

L'invention se rattache au secteur technique des équipements et matériels permettant à des personnes d'être partiellement immergées dans des piscines, en mer, à des fins de relaxation ou thérapeutique.

L'invention concerne ainsi les équipements et matériels pour soutenir aisément des personnes handicapées et les mettre temporairement en milieu aquatique, et des personnes également en cours de rééducation dans des centres médicalisés.

Il existe déjà des équipements aménagés avec des moyens gonflables type bouées qui permettent à des individus de flotter dans des bassins ou piscines. Cependant, se pose le problème de la qualité et de la stabilité de la flottaison. En outre, pour certaines personnes âgées ou handicapées ou en rééducation et devant subir des séances de relaxation en eau, de nombreux problèmes existent de part la difficulté de ces personnes à se prendre en charge, de leur incapacité à nager et de la difficulté de passage de l'endroit ferme où elles se trouvent dans le milieu aquatique. Dans les maisons médicalisées et les centres de rééducation, il faut bien l'assistance de un ou de plusieurs infirmiers pour effectuer ce transfert. Bien plus, aucun moyen sécurisé ne permet ensuite à ces personnes qui sont dans l'eau de se déplacer avec une certaine autonomie. A fortiori, l'enlèvement de la personne en sortie de bain s'avère ainsi très délicate car généralement elle ne fait que peu ou pas d'effort et sa charge est inerte.

La démarche du demandeur a donc été de réfléchir à la conception et mise au point d'un équipement qui puisse faciliter, pour certaines catégories de personnes, la prise de bain à des buts de relaxation, thérapeutiques et/ou de rééducation.

Cette démarche a aussi été de réfléchir et de concevoir à la mise au point d'un équipement qui offre une certaine autonomie de déplacement dans le milieu aquatique, et ce en toute sécurité pour la personne utilisatrice. Chacun reconnaît les bienfaits du bain et de ses effets d'apaisement psychologique et détente musculaire. Aussi, l'objectif était que l'équipement, outre la capacité de flottaison, permette une certaine relaxation de la personne utilisatrice dans de bonnes conditions et de confort.

Un autre but recherché était que la personne utilisant l'équipement de l'invention puisse être très facilement mise dans l'eau en flottaison immédiate et pour être retirer de ce milieu sans efforts.

Un autre but recherché, selon l'invention, était que l'équipement à réaliser puisse être lui-même facilement transportable, peu encombrant, et d'une utilisation aisée.

Tous ces objectifs et paramètres ont ainsi été réalisés par le demandeur, au surplus avec la conception d'un équipement pouvant être utilisé de manière très variée en milieux rééducatifs et de soins, et aussi dans les habitations privées qui bénéficient d'une piscine, et aussi en eau douce (lacs, étangs), ou en mer.

L'équipement amphibie pour la relaxation des personnes, selon l'invention, est ainsi remarquable en ce qu'il comprend une première ossature tubulaire en forme de U définissant la base de construction de l'équipement et recevant un plan d'assise, ladite première ossature recevant les moyens de roulement, et à l'avant coopérant avec une seconde ossature tubulaire ayant une double fonction, d'une part de constituer un repose jambes et, d'autre part, recevoir un moyen support de flotteurs, et en ce que dans sa partie arrière, la première ossature reçoit, à articulations réglables, une troisième ossature tubulaire ayant une triple fonction, d'une part de dosseret et, de seconde part, support d'un moyen pour la réception de flotteurs, et de manoeuvre, et en ce que l'équipement comprend des accoudoirs articulés solidarisés à la troisième ossature et en ce que les flotteurs sont montés sur des bras supports articulés permettant leur intégration dans tout ou partie du volume des cadres supports associés aux secondes et troisièmes ossatures en situation de pliage et étant écartés radialement en situation de dépliage et d'utilisation.

Ces caractéristiques et d'autres encore ressortiront bien de la suite de la description.

Pour fixer l'objet de l'invention illustrée de manière non limitative aux figures des dessins où :
- La figure 1 est une vue en perspective de trois quart arrière de l'équipement amphibie, selon l'invention, configuré selon une chaise longue en position de repliage des moyens de flottaison.
- La figure 2 est une vue en perspective de l'équipement, selon la figure 1, en situation de flottaison.
- La figure 3 est une vue de côté, selon la figure 2.
- La figure 4 est une vue de dessus, selon la figure 2.
- Les figures 5, 6 et 7 sont des vues similaires aux figures 2, 3 et 4 mais avec la représentation d'une personne utilisatrice.
- La figure 8 est une vue en perspective de trois quart avant, selon la figure 1, avec repliage de l'appui pied.
- La figure 9 est une vue de côté, selon la figure 8.
- La figure 10 est une vue en plan, selon la figure 9.
- La figure 11 est une vue en perspective de trois quart avant de l'équipement plié.
- La figure 12 est une vue en perspective de trois quart arrière de l'équipement plié.
- La figure 13 est une vue de profil, selon la figure 11.
- La figure 14 est une vue en plan, selon la figure 11.
- La figure 15 est une vue en perspective, en variante de l'équipement amphibie selon l'invention, en situation déployée.
- La figure 16 est une vue similaire à la figure 15 avec un relevage des accoudoirs.
- La figure 17 est une vue similaire à la figure 15, l'équipement étant orienté en perspective différemment.
- La figure 18 est une vue en perspective de l'équipement amphibie avec une inclinaison de la partie dossier en position relax.
- La figure 19 est une vue en perspective de l'équipement amphibie selon la figure 15, représentant les flotteurs en position repliée avant rangement et pliage de l'équipement ou avant dépliage.

Afin de rendre plus concret l'objet de l'invention, on le décrit de manière non limitative illustrée aux figures des dessins.

L'équipement amphibie, selon l'invention, présente un aspect visuel le faisant ressembler à une chaise longue montée sur roues, et dont les caractéristiques structurelles permettront de répondre aux différents objectifs visés. Cet équipement est référencé dans son ensemble par (E).

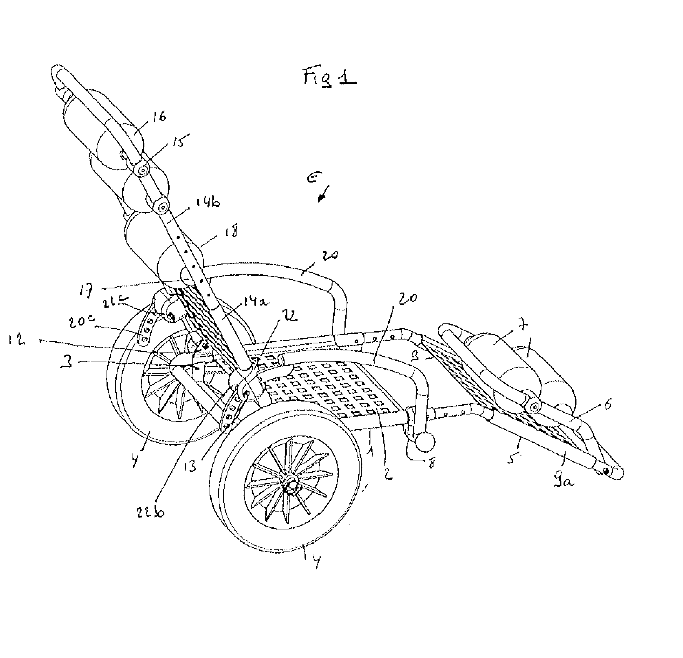

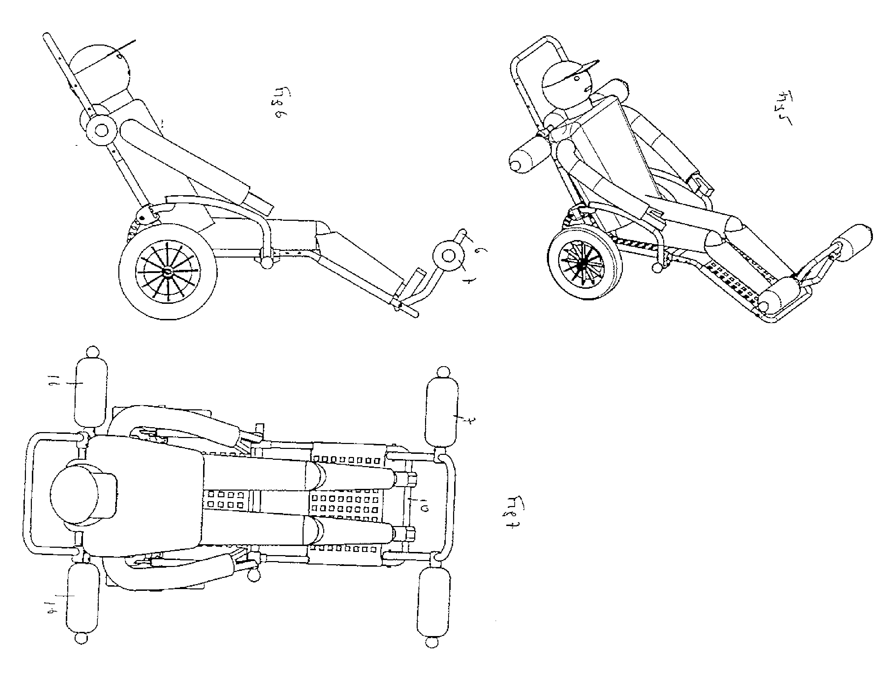

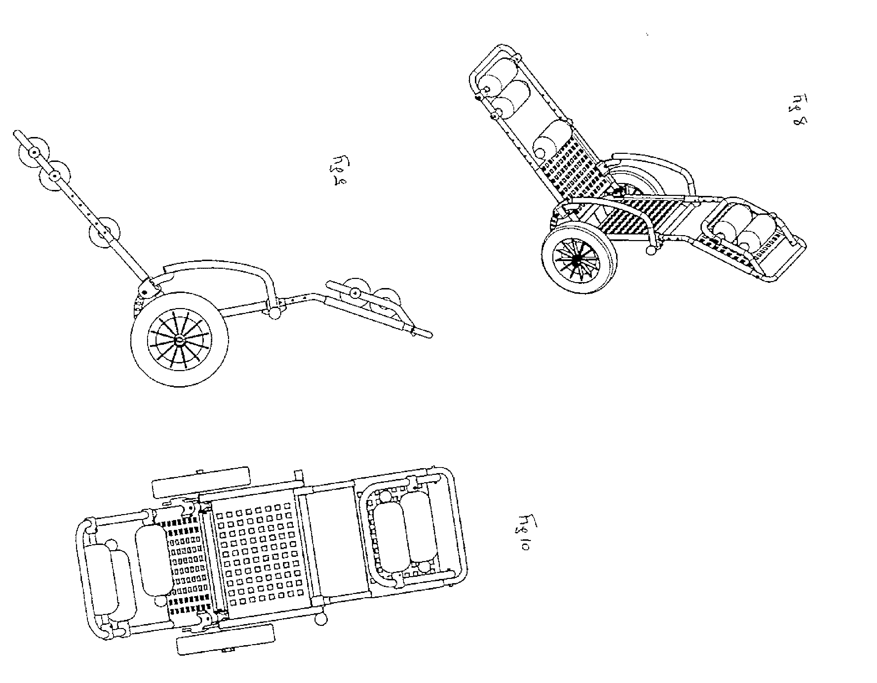

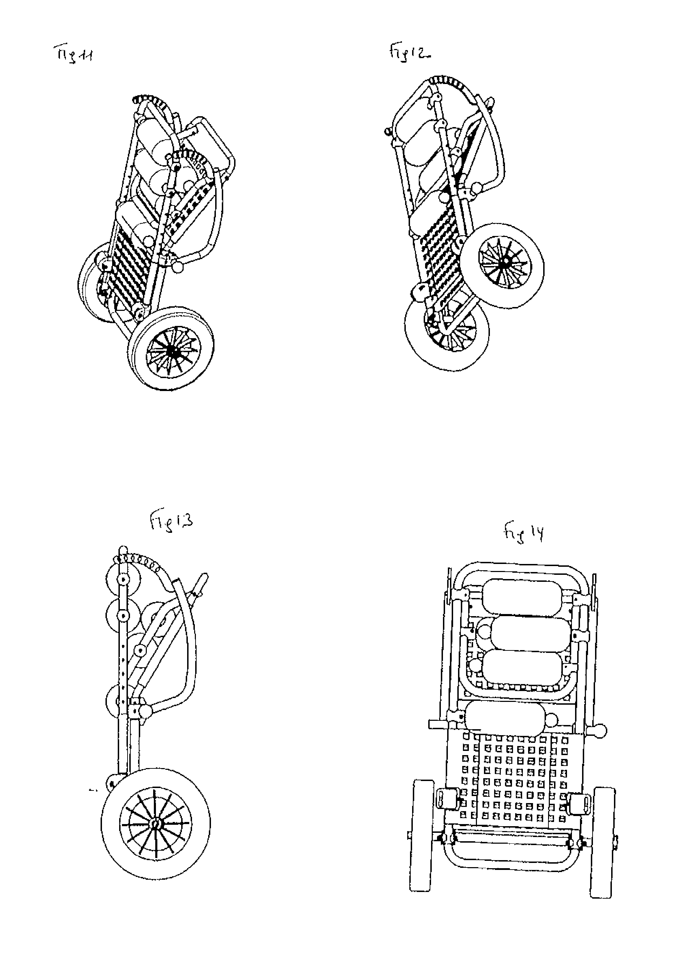

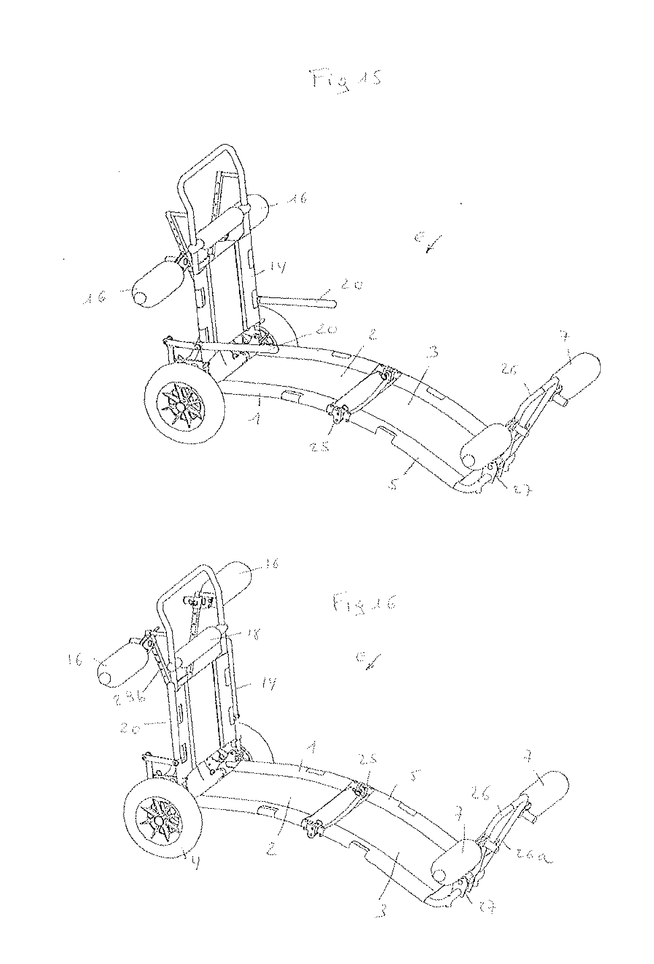

Il a été représenté en mettant en oeuvre le même concept de l'invention dans les deux versions représentées respectivement aux figures 1 à 14 et aux figures 15 à 19.

On utilise les mêmes références pour les mêmes composants ayant les mêmes fonctions.

Il comprend une première ossature tubulaire en forme de U (1) définissant la base de construction de l'équipement et présentant et recevant un plan d'assise (2). Cette assise est pleine ou de préférence ajourée (2a) et réalisée en tous matériaux appropriés et fixés aux longerons (1a) de l'ossature (1) de toute manière appropriée. Dans sa partie arrière, l'ossature (1) reçoit une entretoise de liaison (3) formant essieu support de deux roues arrière (4). Celles-ci avec pneumatique sont de grandes dimensions pour participer à l'assistance de la flottaison et roulage tous terrains. La première ossature (1) coopère avec une seconde ossature tubulaire (5) dans des conditions de fonctionnalité identique mis en oeuvre différemment selon les variantes des figures 1 à 14 ou 15 à 19. Selon la première variante, à l'avant, les longerons (1a) autorisent l'insertion et le coulissement réglable en position d'une seconde ossature tubulaire (5) ayant une double fonction, d'une part de constituer un repose jambes et, d'autre part, pour recevoir un moyen support (6) de flotteurs (7) et aussi de manoeuvre. Plus particulièrement, cette seconde ossature (5) comprend deux longerons (5a) longitudinaux dont les extrémités sont susceptibles de pénétrer dans les longerons (1a). Des ouvertures (5b) formées auxdites extrémités permettent l'introduction de moyens de blocage en position. Plus particulièrement, ces moyens sont disposés à partir d'un bloc de réglage (8) disposé à l'endroit de liaison, ledit bloc ayant une autre fonction décrite par la suite. La seconde ossature (5) reçoit un plan d'appui (9) des jambes qui est réalisé de manière similaire au plan d'assise (2) et fixée aux longerons (5a). Ce plan d'assise jambier comprend, par exemple, des manchons (9a) engagés sur les longerons, lesdits manchons recevant entre eux le plan d'appui.

En partie avant de ladite seconde ossature, peut se trouver une barre entretoise (10) d'appui des pieds. En outre, la seconde ossature reçoit, à articulation, un moyen support (6) de flotteurs (7) constituant un moyen de traction. Ce moyen support a une configuration tubulaire en U et est disposé dans le prolongement longitudinal des ossatures 1 et 5. Il reçoit sur ses ailes (6a) parallèles un ou des bras (11) montés aussi pivotants et sur lesquels est monté un flotteur (7). L'articulation est réalisée de toute manière appropriée avec un moyen de verrouillage temporaire.

Dans sa partie arrière, l'équipement reçoit, près de l'extrémité de ladite première ossature, et sur chaque longeron, une chape (12) dont les ailes reçoivent un axe de liaison (13) pour l'articulation et le pivotement d'une troisième ossature tubulaire (14) ayant, elle aussi, une double fonction, d'une part de dosseret et, d'autre part, support de moyen support (15) de flotteurs (16). Cette troisième ossature (14) comprend ainsi des longerons principaux (14a) autorisant l'emmanchement, le guidage et le coulissement de longerons secondaires (14b) de section plus réduite pour le réglage en dimensions, selon la taille de la personne utilisatrice. Entre les longerons (14b) est prévu un bras fixe (17) et repliable en hauteur, support d'une têtière (18) qui peut, elle aussi, participer à la flottaison de part son matériau constitutif, et aussi dans un plan supérieur, deux bras articulés (19) à une extrémité et recevant chacun un flotteur (16). Comme pour les flotteurs (7) situés à l'avant de l'équipement, le flotteur (16) peut être rentré à l'intérieur du volume du cadre support correspondant ou être écarté en débordement latéral, ainsi qu'il sera exposé par la suite.

Selon une autre disposition de l'invention, l'équipement comprend deux accoudoirs (20) situés à partir de la première ossature support. Dans la première variante, les accoudoirs, outre la fonction d'appui bien classique des bras de l'utilisateur, sont agencés en extrémité pour participer au réglage de l'inclinaison de la partie dosseret de la troisième ossature, et ils sont eux-mêmes articulés à l'avant de leur fixation pour la mise en oeuvre du pliage de l'équipement. Plus particulièrement, chaque accoudoir (20) comprend une partie centrale d'appui (20a) se prolongeant par une partie coudée (20b) qui vient en regard du bloc de réglage (8). Ce bloc reçoit un moyen pivot permettant l'orientation de l'accoudoir, soit côté dosseret, soit à l'opposé dans les situations de pliage ou dépliage de l'équipement. La partie coudée (20b) de l'accoudoir est insérée sur la partie pivot de toute manière appropriée. Un moyen de verrouillage (21) temporaire assure la liaison de l'ensemble. A son autre extrémité, l'accoudoir (20) présente une forme profilée (20c) curviligne avec des trous (20d) en traversant une pièce de liaison (22) montée sur les longerons (14a) de la troisième ossature. Cette pièce de liaison (22) présente une ouverture centrale (22a) autorisant le passage de ladite forme effilée (20c), sa mise en place et enlèvement. La pièce de liaison présente aussi des ailes (22b) munies d'ouvertures (22c) pour l'introduction d'un moyen de verrouillage (23) en position du dosseret selon l'inclinaison angulaire voulue.

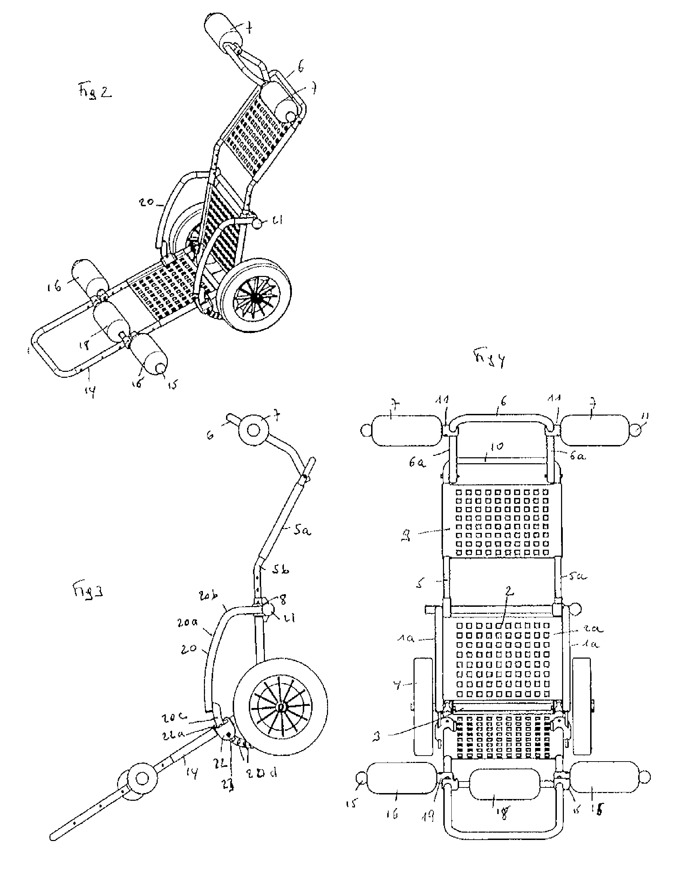

Il convient dès lors d'exposer les conditions d'utilisation de cet équipement. En situation d'utilisation, représentée aux figures 2 à 7, les flotteurs (7 et 16) sont écartés radialement. La personne transportée, préalablement assise, peut être transportée et déplacée jusqu'à atteindre l'eau. S'agissant d'une piscine, les roues permettent sans difficultés de transporter la personne de la plage entourant le bassin dans le bassin lui-même. Les quatre flotteurs (7 et 16) autorisent la flottaison de la personne qui est alors dans une position assise et allongée en toute sécurité. Cette personne garde une certaine autonomie car, selon l'invention, les flotteurs tels que positionnés sont en dehors du champ de la personne et, par exemple, celle-ci a toute liberté de pagayer à l'aide de ses mains.

Pour les personnes « mettant à l'eau » la personne sur l'équipement amphibie de l'invention, la prise de mains s'effectue sur la partie supérieure de la troisième ossature et vice versa pour sortir la personne du bassin. Il apparaît donc que l'équipement amphibie, selon l'invention, est particulièrement facile à manipuler tout en offrant un confort optimisé à la personne utilisatrice et sans danger pour elle. Les différents composants sont choisis pour être compatibles à la mise en eau, douce ou de mer, de l'équipement.

Le pliage et le rangement de l'équipement s'effectue comme suit, et ce afin d'avoir un ensemble compact et peu encombrant. En se référant aux figures 1 à 4 puis 11 à 14, le pliage de l'équipement s'effectue comme suit. L'opérateur ramène les flotteurs (7) à l'intérieur du cadre support puis pivote celui-ci contre la partie d'appui jambier. La seconde ossature est rapprochée au maximum de la première ossature en intervenant sur les moyens de réglage et de fixation disposés sur le bloc (8). Les flotteurs (16) sont réintégrés ensuite dans le volume intérieur de leur cadre support (15) et celui-ci est abaissé par rapport aux longerons principaux de la troisième ossature. Les accoudoirs (20) sont déverrouillés par rapport à la troisième ossature, puis écartés de celle-ci et pivotés vers l'arrière à 180°. Ils sont, le cas échéant, accouplés aux extrémités de la seconde ossature puis, la partie dosseret de la troisième ossature est repliée. On obtient ainsi la configuration de pliage aux figures précitées avec une compacité maximum.

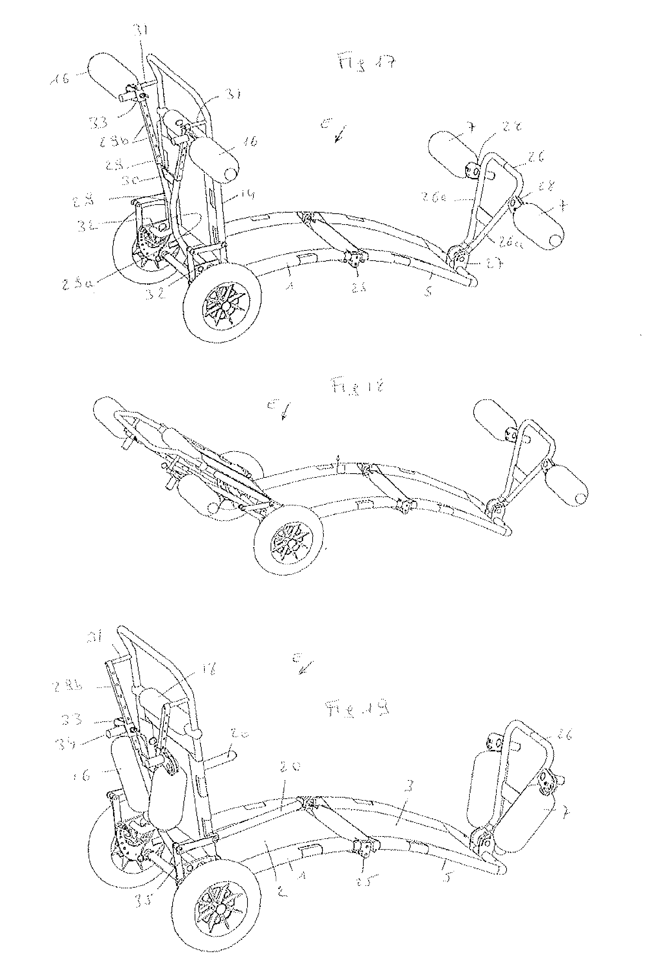

On se réfère à la seconde variante illustré aux figures 15 à 19. Dans ce cas, la première ossature (1) et la seconde ossature (5) sont articulées entre elles à LEURSextrémités en regard entre leurs longerons en regard par des chapes (25) permettant le relèvement et repliage de la seconde ossature sur la première ossature. Les accoudoirs (20) sont seulement articulés à une troisième ossature pour être relevés comme représenté figure 16 , lors du pliage de l'équipement. Le moyen support des flotteurs (7) associé à la seconde ossature est réalisé sous la forme d'un cadre triangulaire (26) articulé à son extrémité formant sommet sur une chape (27) disposée sur le longeron transversal avant de la seconde ossature. Ledit cadre triangulaire (26) présente des côtés (26a) obliques orientés vers l'intérieur et recevant des moyens supports (28) avec moyens de verrouillage des supports de flotteurs (7). En situation d'utilisation (figure 15), les flotteurs (7) sont déployés transversalement. En situation de pliage, figure 19, lesdits flotteurs sont basculés le long des côtés obliques (26a) pour s'intégrer dans tout ou partie du volume de la seconde ossature (5) en pénétrant plus ou moins partiellement à l'intérieur, l'ensemble restant compact.

La troisième ossature tubulaire (14) reçoit un moyen (15) pour la réception de flotteurs (16). Selon cette variante, le moyen (15) est réalisé sous forme de deux montants (29) profilés rentrant dans leur partie médiane et identiques et montés en opposition, en étant reliés entre eux par entretoise (30) ou similaires. Les montants (29) sont déportés sensiblement en arrière par rapport au cadre de l'ossature et sont fixés en partie haute à des bras de liaison (31) et en partie basse à la structure support (32) de l'essieu de roue. Les montants (29) ont un profil rentrant (29a) pour définir un plan incliné intérieur pour permettre ensuite le rangement des flotteurs (16). Plus spécifiquement, lesdits flotteurs (16) sont articulés par leurs bras support sur une chape (33) solidaires des montants (29). Ceux-ci présentent dans leurs hauteurs, différentes ouvertures (29b) permettant un réglage en position des flotteurs (16) à l'aide de moyens de verrouillage spécifiques. Des poignées (34) sont disposées à partir de la chape (33) pour permettre la manipulation de l'équipement selon l'invention. Le repliage s'effectue de manière similaire à la première variante.

Dans cette mise en oeuvre, l'articulation de la troisième ossature recevant la partie dossier et les flotteurs (16) peut être réalisé par un dispositif à biellettes (35) déformables.

Sans sortir du cadre de l'invention, les bras supports des flotteurs peuvent être réglés en position sur les cadres supports pour autoriser un alignement des flotteurs deux à deux et éviter tout déséquilibre. Des moyens de fixation rapides peuvent être ainsi utilisés.

Sans sortir du cadre de l'invention, des modifications de détail peuvent toujours être apportées sans modifier la fonctionnalité de l'invention.

L'équipement amphibie, selon l'invention, répond donc parfaitement aux problèmes posés de manière simple, peu coûteuse, et offre toute sécurité et fiabilité d'utilisation. Les quatre flotteurs sont disposés dans un plan perpendiculaire à l'axe longitudinal de l'équipement en contribuant ainsi à sa stabilité.

Il est bien évident que cet équipement amphibie a été imaginé et créé pour répondre à l'origine aux besoins des personnes âgées et/ou handicapées ou celles en cours de rééducation médicalisée. Cet équipement amphibie peut être aussi utilisé de manière plus classique par des personnes bien portantes.

## Revendications

1. Equipement amphibie pour la relaxation des personnes **caractérisé en ce qu'**il comprend une première ossature tubulaire en forme de U définissant la base de construction de l'équipement et recevant un plan d'assise, ladite première ossature (1) recevant les moyens de roulement, et à l'avant autorisant coopérant avec une seconde ossature tubulaire (5) ayant une double fonction, d'une part de constituer un repose jambes et, d'autre part, recevoir un moyen support (6) de flotteurs (7),
et **en ce que** dans sa partie arrière, la première ossature reçoit, à articulations réglables, une troisième ossature tubulaire (14) ayant une triple fonction, d'une part de dosseret et, d'autre part, support d'un moyen (15) pour la réception de flotteurs (16), et de manoeuvre,
et **en ce que** l'équipement comprend des accoudoirs articulés solidarisés à la troisième ossature,
et **en ce que** les flotteurs (7 et 16) sont montés sur des bras supports articulés permettant leur intégration dans tout ou partie du volume des cadres supports associés aux secondes et troisièmes ossatures en situation de pliage et étant écartés radialement en situation de dépliage et d'utilisation.

2. Equipement amphibie pour la relaxation des personnes, selon la revendication 1, **caractérisé en ce que**, dans sa partie arrière, l'ossature (1) reçoit une entretoise de liaison (3) formant essieu support de deux roues arrière (4).

3. Equipement amphibie pour la relaxation des personnes, selon la revendication 1, **caractérisé en ce que** la première ossature (1) comprend des longerons (1a) autorisant l'insertion et le coulissement réglable en position d'une seconde ossature tubulaire (5).

4. Equipement amphibie pour la relaxation des personnes, selon la revendication 3, **caractérisé en ce que** la seconde ossature comprend deux longerons (5a) longitudinaux dont les extrémités sont susceptibles de pénétrer dans les longerons (1a), avec des ouvertures (5b) formées auxdites extrémités permettent l'introduction de moyens de blocage en position,
et **en ce que** ces moyens sont disposés à partir d'un bloc de réglage (8) disposé à l'endroit de liaison,
et **en ce que** la seconde ossature (5) reçoit un plan d'appui (9) des jambes qui est réalisé de manière similaire au plan d'assise (2) et fixée aux longerons (5a),
et **en ce que** en partie avant de ladite seconde ossature, se trouve une barre entretoise (10) d'appui des pieds,
et **en ce qu'**en outre, la seconde ossature reçoit, à articulation, un moyen support (6) de flotteurs (7).

5. Equipement amphibie pour la relaxation des personnes, selon la revendication 4, **caractérisé en ce que** le moyen support a une configuration tubulaire en U et est disposé dans le prolongement longitudinal des ossatures 1 et 5, et reçoit sur ses ailes (6a) parallèles un ou des bras (11) montés aussi pivotants et sur lesquels est monté un flotteur (7),
et **en ce que** l'articulation est réalisée de toute manière appropriée avec un moyen de verrouillage temporaire.

6. Equipement amphibie pour la relaxation des personnes, selon la revendication 1, **caractérisé en ce qu'**il comprend, dans sa partie arrière, près de l'extrémité de ladite première ossature, et sur chaque longeron, une chape (12) dont les ailes reçoivent un axe de liaison (13) pour l'articulation et le pivotement de la troisième ossature tubulaire (14),
et **en ce que** la troisième ossature (14) comprend des longerons principaux (14a) autorisant l'emmanchement, le guidage et le coulissement de longerons secondaires (14b) de section plus réduite pour le réglage en dimensions, selon la taille de la personne utilisatrice,
et **en ce que** entre les longerons (14b) est prévu un bras fixe (17) support d'une têtière (18) qui participe à la flottaison et aussi dans un plan supérieur, deux bras articulés (19) à une extrémité et recevant chacun un flotteur (16).

7. Equipement amphibie pour la relaxation des personnes, selon la revendication 6, **caractérisé en ce que** les flotteurs (16) sont montés articulés sur un bras support disposé sur le support en prolongement de la troisième ossature, et sont rentrés à l'intérieur du volume du cadre support correspondant ou être écartés en débordement latéral.

8. Equipement amphibie pour la relaxation des personnes, selon les revendications 1, 4 et 6, **caractérisé en ce que** l'équipement comprend deux accoudoirs (20) situés à partir de la première ossature support,
et **en ce que** les accoudoirs, outre la fonction d'appui des bras de l'utilisateur, sont agencés en extrémité pour participer au réglage de l'inclinaison de la partie dosseret de la troisième ossature, et ils sont eux-mêmes articulés à l'avant de leur fixation pour la mise en oeuvre du pliage de l'équipement,
et **en ce que** chaque accoudoir (20) comprend une partie centrale d'appui (20a) se prolongeant par une partie coudée (20b) qui vient en regard du bloc de réglage (8), et **en ce que** le bloc reçoit un moyen pivot permettant l'orientation de l'accoudoir, soit côté dosseret, soit à l'opposé dans les situations de pliage ou dépliage de l'équipement,
et **en ce que** la partie coudée (20b) de l'accoudoir est insérée sur la partie pivot de toute manière appropriée, un moyen de verrouillage (21) temporaire assurant la liaison de l'ensemble,
et **en ce que**, à son autre extrémité, l'accoudoir (20) présente une forme profilée (20c) curviligne avec des trous (20d) en traversant une pièce de liaison (22) montée sur les longerons (14a) de la troisième ossature.

9. Equipement amphibie pour la relaxation des personnes, selon la revendication 8, **caractérisé en ce que** la pièce de liaison (22) présente une ouverture centrale (22a) autorisant le passage de ladite forme effilée (20c), sa mise en place et enlèvement,
et **en ce que** la pièce de liaison présente aussi des ailes (22b) munies d'ouvertures (22c) pour l'introduction d'un moyen de verrouillage (23) en position du dosseret selon l'inclinaison angulaire voulue.

10. Equipement amphibie pour la relaxation des personnes selon la revendication 1, **caractérisé en ce que** la première ossature (1) et la seconde ossature (5) sont articulés entre elles, à leurs extrémités en regard par des chapes (25) permettant le relevage et réglage de la seconde ossature (5) sur la première (1).

11. Equipement amphibie pour la relaxation des personnes selon la revendication 10 **caractérisé en ce que** le moyen support (6) des flotteurs (7) associé à la seconde extrémité (5) est constitué par un cadre triangulaire (26) articulé à son extrémité formant sommet à une chape (27) disposée sur le longeron transversal de la seconde ossature, ledit cadre (26) présentant des cotés (26a) curvilignes orientés vers l'intérieur et recevant des moyens supports (28) des supports de flotteurs (7) avec moyen de verrouillage.

12. Equipement amphibie pour la relaxation de personnes selon la revendication 1, **caractérisé en ce que** la troisième ossature tubulaire (14) reçoit un moyen (15) support des flotteurs (16) et **en ce que** ledit moyen (15) est constitué par deux montants (29) profilés rentrants en leur partie médiane et identiques, lesdits montants (29 étant déportés par rapport au cadre de l'ossature (14) en étant fixés par rapport à ladite ossature et à la structure support (32) de l'essieu, lesdits montants recevant à positions .réglables et verrouillables lesdits flotteurs (10), ceux-ci étant articulés pour être soit déployés, soit en regard de la partie rentrante desdits montants.

13. Equipement amphibie pour la relaxation des personnes selon la revendication 12, **caractérisé en ce que** les montants (29) sont fixés en partie haute à des bras de liaison (31) solidaire de la troisième ossature (14), et **en ce que** les flotteurs (26) sont articulés par leurs bras support sur une chape (33) située dans des montants, et **en ce que** lesdits montants (29) présentent dans leur partie supérieure des ouvertures (29a) pour le réglage en position des flotteurs (16) à l'aide de moyens de verrouillage.

14. Equipement amphibie pour la relaxation des personnes selon la revendication 13, **caractérisé en ce que** les poignées (34) sont disposées à partir de la chape (33).
